# EUROPÄISCHE PATENTANMELDUNG

(11) **EP 1 717 164 A1**
(43) Veröffentlichungstag der Anmeldung: **02.11.2006**
(21) Anmeldenummer: 06008609.7
(22) Anmeldetag: 26.04.2006
(51) Int. Cl.: B65D 90/10

(54) **Fülllochdeckel und Domdeckel für ein Tankfahrzeug**

(30) Priorität: 26.04.2005 DE 102005019676
(71) Anmelder: Niehüser, Hermann, 33449 Langenberg (DE)
(72) Erfinder: Niehüser, Hermann, 33449 Langenberg (DE)
(74) Vertreter: Hanewinkel, Lorenz

(57) **Zusammenfassung**

Fülllochdeckel für einen Domdeckel eines Tankfahrzeuges mit einem Verschlußbügel, der mit einem Kniehebelverschluß lösbar am Domdeckel festlegbar ist, wobei der Verschlußbügel eine Blattfeder ist, die sich quer über den Fülllochdeckel erstreckt und zwischen dem Fülllochdeckel und der Blattfeder mittig ein Audrückelement angeordnet ist und an jedem Endbereich der Blattfeder je eine Spanneinrichtung angeordnet ist, mit denen die Enden der Blattfeder an dem Fülllochdeckel, die Blattfeder vorspannend, befestigt sind.

## Beschreibung

Die Erfindung betrifft einen Fülllochdeckel für einen Domdeckel eines Tankfahrzeuges mit einem Verschlussbügel, der mit einem Kniehebelverschluss lösbar am Domdeckel festlegbar ist, und einen zugehörigen Domdeckel.

Ein Tank eines Tankfahrzeuges weist typischerweise einen Domdeckel auf, der mit einem Fülllochdeckel verschließbar ist. Der Domdeckel ist dabei als Armaturenteil ausgebildet, so dass dieser auch als Träger von Zusatzaunaturen dienen kann. Der Fülllochdeckel wird zum Befüllen der einzelnen Tankkammern und als Besichtigungsöffnung verwendet.

Ein Tank mit einem derartigen Domdeckel und Fülllochdeckel ist bspw. aus der

DE 203 01 263 U1 bekannt.

Durch das Inkrafttreten neuer europäischer Normen (EN 13314/EN 13317 und EN 14596) muss ein Tank (und somit der Domdeckel und der Fülllochdeckel des Tanks) eine spezielle Fallprüfung bestehen, wobei sich während derselben ein extrem hoher Druck in dem Tank aufbaut. Nach der Fallprüfung darf der Tank keine Undichtigkeit aufweisen.

In anderen Ländern wiederum ist ein niedrigerer Schließdruck gefordert, um beim Befüllen des Tanks und Ausfall von Füllsicherungen eine Beschädigung des Tanks zu vermeiden.

Durch diese Normen werden hohe Anforderungen an den Tank und somit an den Domdeckel und den Fülllochdeckel des Tanks gestellt.

Aufgabe der Erfindung ist es daher, eine Armatur für einen Tank eines Tankfahrzeuges bereitzustellen, durch die ein geforderter Schließdruck beim manuellen Verschließen des Tanks erreicht wird.

Diese Aufgabe wird erfindungsgemäß dadurch gelöst, dass der Verschlussbügel eine Blattfeder ist, die sich quer über den Fülllochdeckel erstreckt und zwischen dem Fülllochdeckel und der Blattfeder mittig ein Andrückelement angeordnet ist und an jedem Endbereich der Blattfeder je eine Spanneinrichtung angeordnet ist, mit denen die Enden der Blattfeder an dem Fülllochdeckel, die Blattfeder vorspannend, befestigt sind.

Die Stärke der Blattfeder ist so dimensioniert, dass entweder ein Schließdruck von etwa 0,3 bar beim Befüllen oder ein Schließdruck von etwa 2 bar im Fahrbetrieb erreicht wird.

Wird ein Tank mit einer erfindungsgemäßen Armatur dem Falltest unterzogen, so ermöglicht die Steifigkeit der Blattfeder ein Abfangen der entstehenden Druckspitzen am Fülllochdeckel. Bei dem Falltest wird die Feder aber nicht zerstört.

Vorteilhaft weist der Fülllochdeckel eine kreisförmige Grundfläche auf.

Bevorzugt verläuft die Blattfeder symmetrisch zu einem Durchmesser des Fülllochdeckels.

In einer Ausführung ist das Andrückelement eine Hülse, die mit einer Schraube zwischen der Blattfeder und dem Fülllochdeckel gehalten ist. Diese Ausführung ist insbesondere für die Version der Blattfeder für den hohen Schließdruck von etwa 2 bar vorgesehen.

In einer weiteren Ausführung ist das Andrückelement als senkrecht auf dem Fülllochdeckel stehendes Blech ausgeführt, dessen zur Blattfeder zeigende Kante bogenförmig ausgeführt ist. Dabei entspricht diese Bogenform der maximal vorgesehenen Krümmung der Blattfeder. Diese Ausführungsform ist insbesondere für die Version der Blattfeder mit dem niedrigeren Schließdruck von etwa 0,3 bar vorgesehen. Im Falle von sehr hohen Druckspitzen, etwa bei einem Fallversuch, stützt sich die Blattfeder auf dem Bogen ab und die Blattfeder wird nicht zerstört.

In einer bevorzugten Ausführungsform ist die Spanneinrichtung jeweils eine Spannschraube, deren eines Ende an der Blattfeder und deren anderes Ende an der tankseitigen Grundfläche des Fülllochdeckels angreifen.

Vorteilhaft sind die Spanneinrichtungen domdeckelseitig über eine Versteifungsschiene, eine Versteifungsplatte oder einen Versteifungsring miteinander verbunden.

Die Versteifung ist mit dem Fülllochdeckel tankseitig bevorzugt über eine Schraubverbindung verbunden. Alternativ kann eine Schweißverbindung vorgesehen sein. Vorteilhaft bringt die Spanneinrichtung einen mehrfach höheren Spannweg an der Blattfeder auf als der Knichebelverschluss zusätzlich beim Verschließen. Da nur der Endweg der Spannung der Feder vorn Kniehebelverschluss aufgebracht wird, ist die Hebelübersetzung des Kniehebels groß zu gestalten, so dass bei einem relativ kurzen Bedienhebel und etwa 90° Schwenkung die volle Spannkraft zum Verschließen des Deckels aufgebracht wird. Der Bedienhebel hat etwa die Länge der Blattfeder.

Vorteilhaft weist der Fülllochdeckel eine solche Steifigkeit auf, dass er eine deutlich geringere Krümmung als die Blattfeder aufweist.

Vorteilhaft ist die Blattfeder aus Federstahl gebildet und ist zu ihren Enden hin jeweils verjüngt ausgebildet. Die Version der Blattfeder für den hohen Schließdruck ist breiter ausgeführt und verjüngt sich auf etwa 1/3 ihrer Breite. Die Version der Blattfeder für den niedrigeren Schließdruck ist schmaler ausgeführt und verjüngt sich auf etwa 1/2 ihrer Breite.

Sofern das Andrückelement als Andrückblech mit Bogen ausgeführt ist, kann in einer vorteilhaften Ausführung das Andrückblech über einen Druckzylinder abgesenkt werden. In der abgesenkten Position liegt die Blattfeder frei und der Fülllochdeckel wird nur mit einer geringen Schließkraft, etwa von 0,3 bar, auf den Domdeckel gedrückt. Diese Position ist zum Befüllen des Tankes vorgehen, um bei Ausfall von Sicherungseinrichtungen eine Beschädigung des Tanks durch Überdruck zu vermeiden.

Im Fahrbetrieb liegt kein Druck auf dem Druckzylinder und der Bogen greift an einem äußeren Punkt unter die Blattfeder. Diese weist damit eine viel höhere Steifigkeit auf und es wird ein höherer Schließdruck, etwa von 2 bar, auf den Fülllochdeckel ausgeübt. Mit einem solchen Schließdruck werden auch die vorgeschriebnen Fallversuche durchgeführt. Die eigentlich weichere Blattfeder nimmt die hohen Druckspitzen auf, ohne zerstört zu werden.

Eine Dichtung zur Abdichtung des Fülllochdeckels an einem Domdeckel ist vorteilhaft mittels einer Schwalbenschwanzführung in dem Fülllochdeckel gekammert gehalten. Bevorzugt weist der Fülllochdeckel tankseitig einen Vorsprung derart auf, dass eine an der tankseitigen Grundfläche des Fülllochdeckels gebildete Benetzungsflüssigkeit in den Tank zurückläuft, wenn der Fülllochdeckel um ein Scharnierende der Blattfeder geschwenkt geöffnet ist.

Ein erfindungsgemäßer Domdeckel zur Verbindung mit einem Fülllochdeckel, insbesondere einem erfindungsgemäßen Fülllochdeckel, umfasst eine erste und eine zweite Halterung zum Halten jeweils eines Endes der Blattfeder und eine Schließdruckeinrichtung, durch die die Blattfeder weiter spannbar ist, wenn der Fülllochdeckel auf dem Domdeckel aufliegt. Durch die Schließdruckeinrichtung wird ein geeigneter Schließdruck zwischen dem Fülllochdeckel und dem Domdeckel erzeugt.

Vorteilhaft umfasst die erste Halterung eine Gelenkachse, an der ein Scharnierende der Blattfeder derart angeordnet ist, dass der Fülllochdeckel um die Gelenkachse verschwenkbar ist, so dass die Blattfeder als Vcrschlussbügel dient.

In einer bevorzugten Ausführungsform dient ein Kniehebel als zweite Halterung und als Schließdruckeinrichtung.

Bevorzugt sind die erste und zweite Halterung tankinnenseitig durch mindestens ein Versteifungselement miteinander verbunden, um so einen Dichtungsbereich für den Fülllochdeckel besonders formstabil auszubilden.

Vorteilhaft ist das Versteifungselement ein Versteifungsring aus Blech, der hochkant an dem Domdeckel befestigt ist.

Vorteilhaft ist mindestens ein Versteifungsring konzentrisch zum Fülllochdeckel angeordnet, wobei die Versteifungsringe elliptisch oder kreisförmig ausgebildet sein können. In einer bevorzugten Ausführungsform sind zwei elliptische Versteifungsringe mit verschieden langen großen Achsen konzentrisch zum Fülllochdeckel angeordnet.

Das mindestens eine Versteifungselement ist mit dem Domdeckel bevorzugt über eine Schraubverbindung verbunden. Alternativ kann eine Schweißverbindung vorgesehen sein.

Ein erfindungsgemäßer Fülllochdeckel kann unmittelbar auf einem Tank angeordnet sein oder auf einem erfindungsgemäßen Domdeckel angeordnet sein, der auf einem Tank angeordnet ist, insbesondere mit dem Tank umfangsseitig verschraubt ist.

Dieser Tank wird vorzugsweise auf einem Tankfahrzeug verwendet.

Die Erfindung wird nachfolgend anhand von Ausführungsbeispielen unter Bezugnahme auf Figuren erläutert. Es zeigen:
- Fig. 1: eine Draufsicht auf eine erfindungsgemäße Armatur,
- Fig. 2: eine untere Ansicht der Armatur der Fig. 1,
- Fig. 3: eine Seitenansicht entlang der Linie III-III der Fig. 1,
- Fig. 4: eine Seitenansicht, teilweise eine Querschnittsansicht, entlang der Linie IV-IV der Fig. 1,
- Fig. 5: eine Seitenansicht ähnlich zu der Fig. 3, wobei diese Seitenansicht den Fülllochdeckel in einer geöffneten Stellung zeigt und zusätzlich ein Vorsprung an dem Fülllochdeckel angeordnet ist, und
- Fig. 6: eine Seitenansicht ähnlich zu der Fig. 4, wobei diese Seitenansicht den Fülllochdeckel in einer geöffneten Stellung zeigt und zusätzlich ein Vorsprung an dem Fülllochdeckel angeordnet ist,
- Fig. 7: eine Draufsicht auf die Armatur mit einem Andrückblech,
- Fig. 8: Einen Querschnitt durch eine Armatur gemäß Fig. 7.

Grundsätzlich sind verschiedene Ausführungen der erfindungsgemäßen Armatur denkbar. Im Folgenden wird eine bevorzugte Ausführungsform beschrieben.

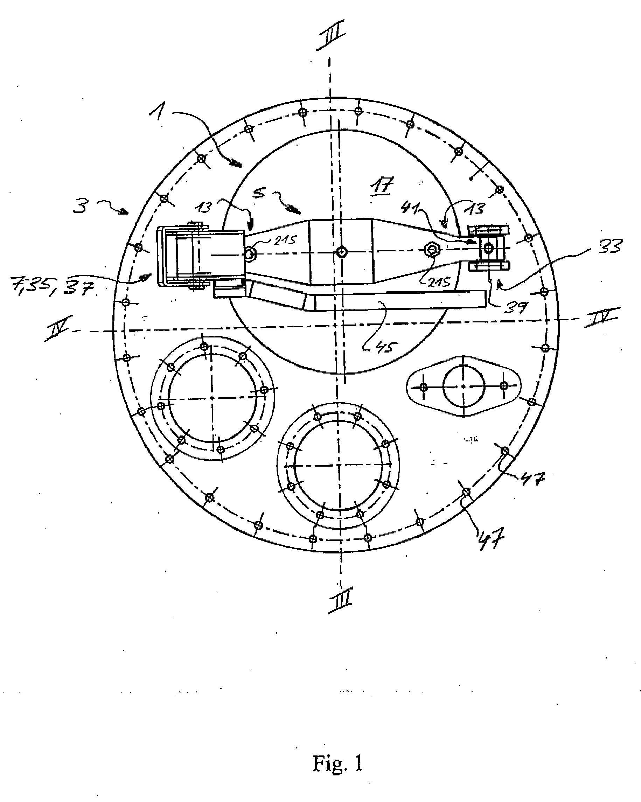

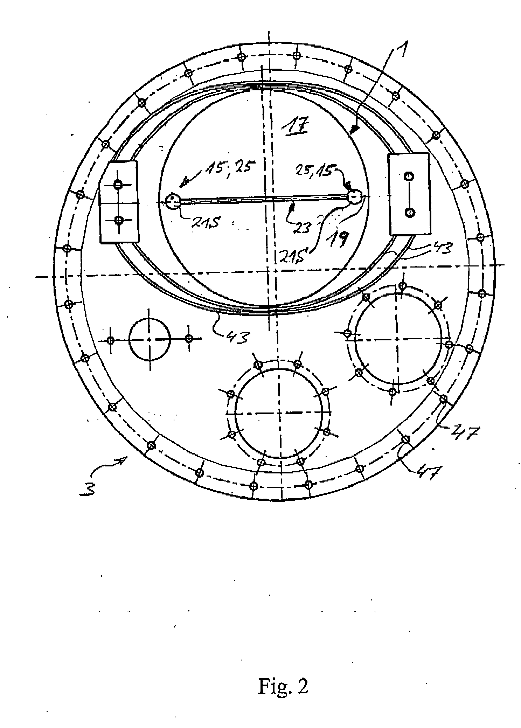

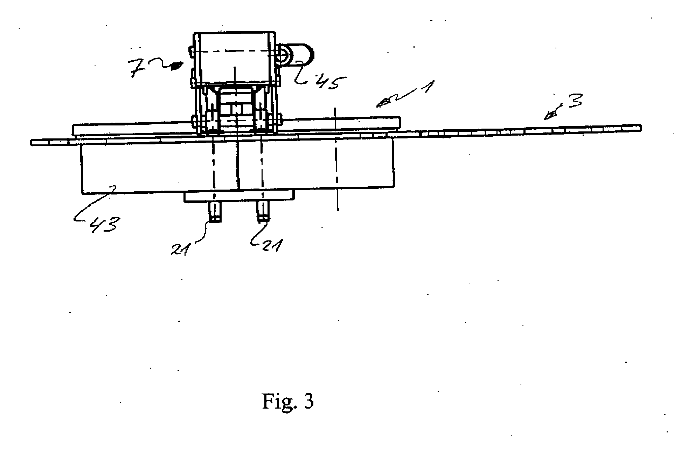

Unter Bezug auf die Figuren 1 bis 4 wird folgend zunächst der erfindungsgemäße Fülllochdeckel 1 beschrieben.

Der Fülllochdeckel 1 weist eine kreisförmige Grundfläche 17 auf, an deren Umfang tankseitig eine Schwalbenschwanzführung 9 zur Aufnahme einer Dichtung 29 gebildet ist, um den Fülllochdeckel 1 im geschlossenen Zustand an einem Domdeckel 3 abzudichten.

Eine Blattfeder 5 verläuft symmetrisch zu einem Durchmesser 19 des Fülllochdeckels 1 und ist über zwei Spanneinrichtungen 15, die in Endbereichen 13 der Blattfeder 5 angeordnet sind, und ein Andruckelement 11 mit der kreisförmigen Grundfläche 17 verbunden. Das Andrückelement 11 ist vorliegend eine Hülse, die zwischen die Blattfeder 5 und die kreisförmige Grundfläche 17 gesteckt ist und dort mittels einer Schraube 21 gehalten ist, die durch die Hülse verläuft. Die Spanneinrichtung 15 ist vorliegend durch eine Spannschraube 21S gebildet, deren eines Ende an der Blattfeder 5 und deren anderes Ende tankseitig an der kreisförmigen Grundfläche 17 angreift.

Die Spanneinrichtungen 15 sind vorliegend durch eine Versteifungsschiene 23 verbunden, um eine Versteifung der kreisförmigen Grundfläche 17 und der Spanneinrichtungen 15 zu bewirken. Die Versteifungsschiene 23 ist mittels einer Schraubverbindung 25 mit dem Fülllochdeckel 1 verbunden.

Mit Hilfe der Spannschrauben 21S wird die Blattfeder 5 an der kreisförmigen Grundfläche 17 befestigt.

In der bevorzugten Ausführungsform sind die Spannschrauben 21 S in der Blattfeder 5 in einem Langloch geführt. Die Spannschrauben 21S können nun über die eigentliche Befestigung hinaus angezogen werden, um eine Vorspannung der Blattfeder 5 zu erreichen. Die Spannschrauben 21S werden dabei bevorzugt gleichmäßig stark angezogen, so dass sich für die Enden der Blattfeder 5 ein gleich großer Spannweg 27 und somit eine symmetrische Belastung der Blattfeder 5 ergibt.

Ein Scharnierende 41 der Blattfeder 5 ist um eine Gelenkachse 39, die in einer ersten Halterung 33 gebildet ist, verschwenkbar, so dass der gesamte Fülllochdeckel 1 um die Gelenkachse 39 verschwenkbar ist, um so den Domdeckel 3 z.B. zum Betanken zu öffnen.

Die erste Halterung 33 ist mittels zweier Schrauben 21 an den Domdeckel 3 geschraubt. Gegenüber der ersten Halterung 33 ist ein Kniehebelverschluss 7 mittels zweier Schrauben 21 an den Domdeckel 3 geschraubt.

Die beiden Schrauben 21 zur Befestigung des Kniehebelverschlusses 7 und die beiden Schrauben 21 zur Befestigung der ersten Halterung 33 sind über zwei Versteifungsringe 43, die taukseitig an dem Domdeckel 3 über eine Schraubverbindung 25 befestigt sind, miteinander verbunden. Die beiden Versteifungsringe 43 bestehen aus einem Blech und sind hochkant an dem Domdeckel 3 befestigt. Vorliegend sind die beiden Versteifungsringe konzentrisch angeordnet und weisen eine elliptische Form auf. Auf diese Weise wird eine Versteifung für die Schrauben 21 erreicht, die den Kniehebelverschluss 7 und die erste Halterung 33 an dem Domdeckel 3 befestigen, und ein Dichtungsbereich für den Fülllochdeckel 1 ist besonders formstabil ausgebildet.

In dieser bevorzugten Ausführungsform dient der Kniehebelverschluss 7 als zweite Halterung 35 (um ein Ende der Blattfeder 5, das dem Scharnierende 41 gegenüberliegt, bei nicht vollsiändig geschlossenem Fülllochdeckel 1 zu halten) und als Schließdruckeinrichtung 37 (die einen geeigneten Schließdruck erzeugt, mit dem der Fülllochdeckel 1 im geschlossenen Zustand auf dem Domdeckel 3 aufliegt).

Der Kniehebelverschluss 7 umfasst einen ersten Hebelarm HA1 zwischen einer ersten Kniehebelachse KA1 und einer zweiten Kniehebelachse KA2 sowie einen zweiten Hebelarm HA2 zwischen der zweiten Kniehebelachse KA2 und einer dritten Kniehebelachse KA3, um den Fülllochdeckel 1 mit einem geeigneten Schließdruck auf den Domdeckel 3 zu drücken, wie folgend beschrieben wird:

Zunächst wird der Fülllochdeckel 1 bei geöffnetem Kniehebelverschluss 7 auf den Domdeckel 3 gelegt. Folgend wird der Knichebelverschluss 7 um die erste Kniehebelachse KA1 verschwenkt, bis der erste Hebelarm HA1 im Wesentlichen senkrecht zu dem Domdeckel 3 steht. Folgend wird, durch eine Kulisse 48 geführt, der zweite Hebelarm HA2 um die zweite Kniehebelachse KA2 verschwenkt, bis die dritte Kniehebelachse KA3 an der Blattfeder 5 in der Mulde 50 schwenkbar lagert.

Liegt die dritte Kniehebelachse KA3 an der Blattfeder an, so ist der Fülllochdeckel 1 durch den Kniehebelverschluss 7 und die erste Halterung 33 an dem Domdeckel 3 gehalten, wodurch ein vorläufiges Halten des Fülllochdeckels 1 an dem Domdeckel 3 bewirkt ist. In diesem Stadium wird noch kein geeigneter Schließdruck erzeugt, der eine ausreichende Abdichtung zwischen dem Fülllochdeckel 1 und dem Domdeckel 3 bewirkt.

Folgend wird der zweite Hebelarm HA2 mittels eines Handhebels 45 weiter um die zweite Kniehebelachse KA2 verschwenkt, bis die dritte Kniehebelachse KA3 den toten Punkt überwindet, so dass sich der Kniehebelverschluss 7 nicht mehr öffnen kann.

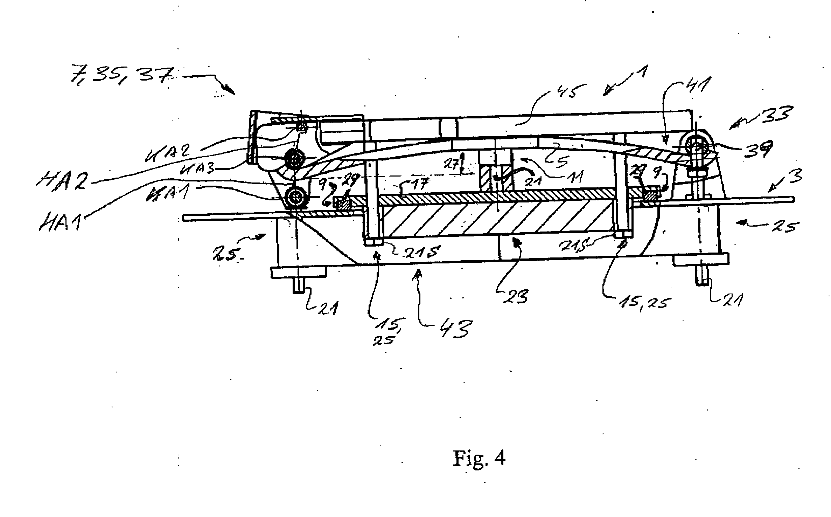

Nun ist ein ausreichender Schließdruck zwischen dem Fülllochdeckel 1 und dem Domdeckel 3 erzeugt, wobei die Blattfeder 5 nun durch die erste Halterung 33 und den Kniehebelverschluss 7 nach unten und durch das Andrückelement 11 nach oben gedrückt wird (Orientierung gemäß Fig. 4).

Da die Blattfeder 5 nun von der ersten Halterung 33, dem Andrückelement 11 und dem Kniehebelverschluss 7 verformt wird, d. h. diese Elemente eine Kraft auf die Blattfeder 5 ausüben, üben die Spanneinrichtungen 15 keine Kraft mehr auf die Blattfeder 5 aus. In der bevorzugten Ausführungsform legt die Blattfeder 5 beim Verschließen durch den Kniehebelverschluss 7 nur noch einen geringen Spannweg 27 zurück, so dass ein bedeutender Teil des letztendlich beim vollständigen Verschließen zurückgelegten Spannweges 27 bereits durch die Spanneinrichtungen 15 zurückgelegt ist (d.h. diese bereits eine große Vorspannung erzeugt haben).

In einer Ausführungsform bringen die Spanneinrichtungen 15 60 % des letztendlich bewirkten Spannweges 27 auf, in einer bevorzugten Ausführungsform mindestens 80 %, in einer weiter bevorzugten Ausführungsform mindestens 90 % und in einer höchstbevorzugten Ausführungsform mindestens 95 %.

Der Domdeckel 3 kann durch Löcher 47 an einen Tank geschraubt sein, wobei der Domdeckel 3 bevorzugt aus dem gleichen Material besteht wie der Tank.

Die zweite Halterung 35 und die Schließdruckeinrichtung 37 sind in der beschriebenen bevorzugten Ausführungsform durch den Kniehebelverschluss 7 gebildet. In alternativen Ausführungsformen können die zweite Halterung 35 und die Schließdruckeinrichtung 37 getrennt voneinander ausgeführt sein. Beispielsweise kann die zweite Halterung in Form eines lösbaren Schnappverschlusses ausgebildet sein, der den Fülllochdeckel 1 (mit einem geringen Druck, der zum Halten des Fülllochdeckels 1 auf dem Domdeckel 3 ausreicht) geschlossen am Domdeckel 3 hält, und die Schließdruckeinrichtung 35 durch einen Kniehebelverschluss 7 gebildet sein, um den geeigneten Schließdruck zwischen dem Fülllochdeckel 1 und dem Domdeckel 3 zu erzeugen, der um ein vielfaches größer als der durch den Schnappverschluss erzeugte Druck ist.

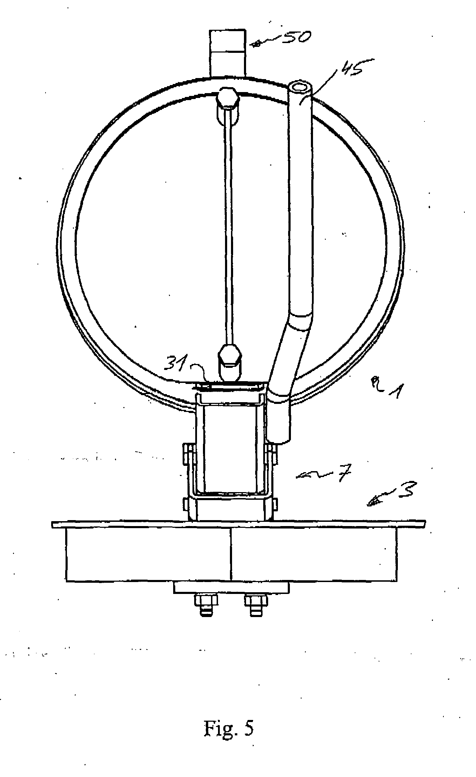

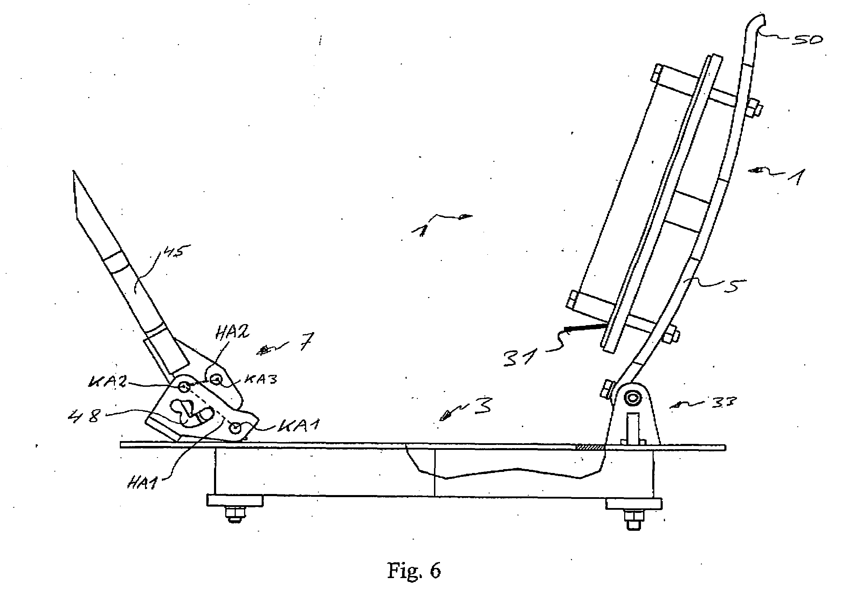

Wie in den Figuren 5 und 6 gezeigt, kann der Fülllochdeckel 1, ferner einen Vorsprung 31 aufweisen, damit eine an der tankseitigen Grundfläche 17 gebildete Benetzungsflüssigkeit bei geöffnetem Fülllochdeckel 1 in den Tank zurückläuft. In der dargestellten Ausführungsform ist der Vorsprung 31 durch ein Tropfblech gebildet.

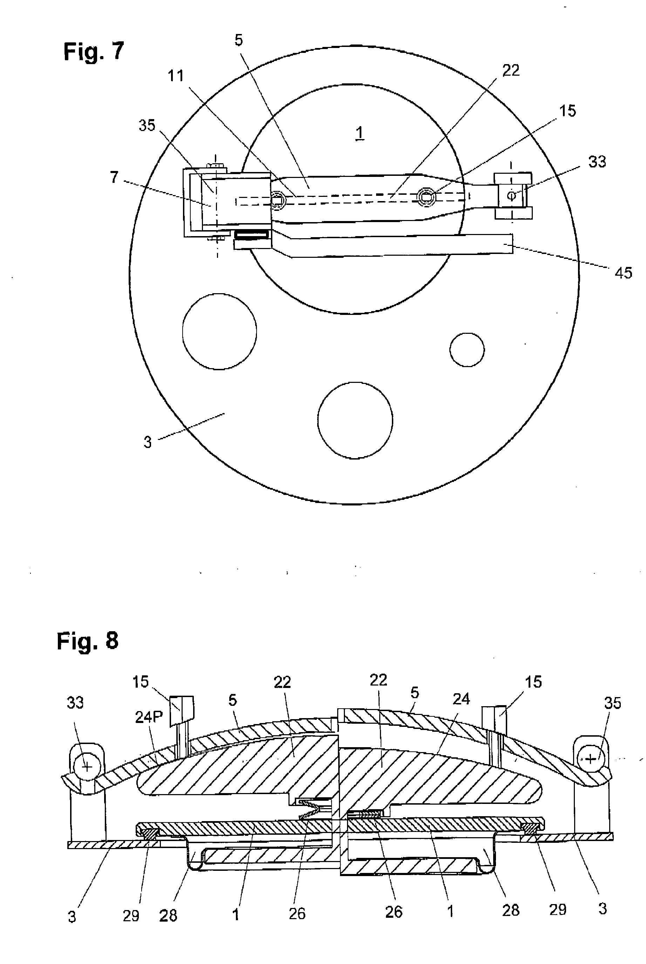

In Fig. 7 ist eine Ausführung der Armatur mit einem Andrückblech 22 anstelle einer Andrückhülse in einer schematischen Aufsicht gezeigt. Auf den Domdeckel 3 wird der Fülllochdeckel 1 mittels der Blattfeder 5 gespannt. Dabei ist die Blattfeder 5 mittels der Spannelemente 15 über die Spannschrauben 21S vorgespannt und mit dem Kniehebelverschluss 7 manuell über den Hebel 45 verschlossen. Die Blattfeder 5 ist in den Lagern 33 und 35 gehalten und sie wird mit dem Andruckelement 11, das als Andrückblech 22 ausgeführt ist, gestützt. Unter dem Fülllochdeckel 1 befindet sich der Druckzylinder 28, über den gegen die Tellerfedern 26 das Andrückblech 22 abgesenkt werden kann.

In Fig. 8 ist ein Querschnitt in einem Normalzustand und in einem abgesenkten Zustand gezeigt. Im Normalzustand stützt die als Bogen ausgeführte Kante 24 des Andrückbleches 22 die Blattfeder 5 im Seitenbereich in dem Punkt 24P soweit ab, dass die Feder sehr viel härter ist und ein höherer Schließdruck erreicht wird.

Die Blattfeder 5 ist in dem ersten Lager 33 und dem zweiten Lager 35 gehalten und verschließt mit dem Fülllochdeckel 1 und der Dichtung 29 den Domdeckel 3.

Das Andrückblech 22 ist durch die Tellerfedern 26 in dem Normalzustand gehalten und kann durch den Druckzylinder 28 abgesenkt werden.

Dazu ist das Andrückblech 22 durch eine abgedichtete Öffnung des Fülllochdeckels 1 hindurch zu dem Druckzylinder 28 geführt. Ein entsprechend hoher Druck kann im Druckzylinder pneumatisch oder hydraulisch aufgebaut werden.

Falls das Andrückblech 22 über den Druckzylinder 28 abgesenkt ist, liegt die Blattfeder 5 in der Mitte mit dem Punkt 24P auf dem Andrückblech 22 auf und sie weist eine sehr viel geringere Federkraft auf, so dass der Fülllochdeckel 1 schon bei geringeren Drücken von dem Domdeckel 3 abhebt.

### Bezugszeichenliste

- 1: Fülllochdeckel
- 3: Domdeckel
- 5: Blattfeder
- 7: Kniehebelverschluss
- 9: Schwalbenschwanzführung
- 11: Andrückelement
- 13: Endbereich der Blattfeder
- 15: Spanneinrichtung
- 17: kreisförmige Grundfläche
- 19: Durchmesser des Fülllochdeckels
- 21: Andrückelement
- 22: Andrückblech
- 21S: Spannschraube
- 23: Versteifungsschinene
- 24: Bogenkante
- 24P: Andrückpunkt
- 25: Schraubverbindung
- 26: Tellerfeder
- 27: Spannweg
- 28: Druckzylinder
- 29: Dichtung
- 31: Vorsprung
- 33: erste Halterung
- 35: zweite Halterung
- 37: Schließdruckeinrichtung
- 39: Gelenkachse
- 41: Scharnierende der Blattfeder
- 43: Versteifungsring
- 45: Handhebel
- 47: Loch
- 48: Kulisse an 7
- 50: Mulde an 5
- HA1: erster Hebelarm
- HA2: zweiter Hebelarm
- KA1: erste Knichebelachsc
- KA2: zweite Kniehebelachse
- KA3: dritte Kniehebelachse

## Patentansprüche

1. Fülllochdeckel (1) für einen Domdeckel (3) eines Tankfahrzeuges, der mit einem hohen Schließdruck verschlossen werden muss, mit einem Verschlussbügel (5), der mit einem Knichcbclverschluss (7) lösbar am Domdeckel (3) festlegbar ist, wobei der Verschlussbügel eine Blattfeder (5) ist, die sich quer über den Fülllochdeckel (1) erstreckt und zwischen dem Fülllochdeckel (1) und der Blattfeder (5) mittig ein Andrückelement (11) angeordnet ist, **dadurch gekennzeichnet, dass** an jedem Endbereich (13) der Blattfeder (5) je eine Spanneinrichtung (15) angeordnet ist, mit denen die Enden der Blattfeder (5) an dem Fülllochdeckel (1) befestigt sind und damit die Blattfeder (5) symmetrisch auf eine solche Kraft vorspannen, dass über den Kniehebelverschluss (7) nur ein geringer Teil des Schließdrucks und des Schließweges aufgebracht werden muss.

2. Fülllochdeckel nach Anspruch 1, **dadurch gekennzeichnet, dass** dieser eine kreisformige Grundfläche (17) aufweist.

3. Fülllochdeckel nach Anspruch 2, **dadurch gekennzeichnet, dass** die Blattfeder (5) symmetrisch zu einem Durchmesser (19) des Fülllochdeckels (1) verläuft.

4. Fülllochdeckel nach Anspruch 1, **dadurch gekennzeichnet, dass** das Andrückelement (11) eine durch eine Schraube (21) gehaltene Hülse ist.

5. Fülllochdeckel nach Anspruch 1, **dadurch gekennzeichnet, dass** das Andrückelement (11) ein senkrecht auf dem Fülllochdeckel stehendes Andrückblech (22) ist, dessen zur Blattfeder zeigende Kante (24) bogenförmig ausgeführt ist.

6. Fülllochdeckel nach Anspruch 5, **dadurch gekennzeichnet, dass** der Bogen (24) des Andrückblechs (22) der maximalen Krümmung der Blattfeder (5) entspricht.

7. Fülllochdeckel nach einem der vorangehenden Ansprüche, **dadurch gekennzeichnet, dass** jede Spanneinrichtung (15) eine Spannschraube (21S) ist, deren eines Ende an der Blattfeder (5) und deren anderes Ende an der tankseitigen Grundfläche des Fülllochdeckels (1) angreift.

8. Fülllochdeckel nach einem der vorangehenden Ansprüche, **dadurch gekennzeichnet, dass** die Spanneinrichtungen (15) domdeckelseitig über eine Versteifungsschiene (23), eine Versteifungsplatte oder einen Versteifungsring miteinander verbunden sind.

9. Fülllochdeckel nach Anspruch 1, **dadurch gekennzeichnet, dass** der Fülllochdeckel (1) eine solche Steifigkeit aufweist, dass er eine deutlich geringere Krümmung als die Blattfeder aufweist.

10. Fülllochdeckel nach Anspruch 4, **dadurch gekennzeichnet, dass** die Blattfeder (5) aus Federstahl gebildet ist und zu ihren Enden jeweils auf etwa 1/3 ihrer Breite verj üngt ausgebildet ist.

11. Fülllochdeckel nach Anspruch 5, **dadurch gekennzeichnet, dass** die Blattfeder (5) aus Federstahl gebildet ist und zu ihren Enden jeweils auf etwa 1/2 ihrer Breite verj üngt ausgebildet ist.

12. Fülllochdeckel nach Anspruch 5, **dadurch gekennzeichnet, dass** das Andrückblech (22) von einer Tellerfeder (26) gestützt ist, die erst bei einem höheren Druck als dem maximalen Schließdruck zusammengepresst wird.

13. Fülllochdeckel nach Anspruch 12, **dadurch gekennzeichnet, dass** das Andrückblech (22) durch einen hydraulisch oder pneumatisch erzeugten Pressdruck gegen die Tellerfeder (26) abgesenkt und damit durch die Blattfeder (5) eine geringer Schließdruck bewirkt ist.

14. Fülllochdeckel nach einem der vorangehenden Ansprüche, **dadurch gekennzeichnet, dass** eine Dichtung (29) zur Abdichtung des Fülllochdeckels (1) an einem Domdeckel (3) mittels einer Schwalbenschwanzführung (9) in dem Fülllochdeckel (1) gekammert gehalten ist.

15. Fülllochdeckel nach einem der vorangehenden Ansprüche, **dadurch gekennzeichnet, dass** dieser tankseitig einen Vorsprung (31) derart aufweist, dass eine an der tankscitigen Grundfläche des Fülllochdeckels (1) gebildete Benetzungsflüssigkeit bei um ein Scharnierende (41) der Blattfeder (5) geschwenkt geöffneten Fülllochdeckel (1) in den Tank zurückläuft.

16. Domdeckel zur Verbindung mit einem Fülllochdeckel, insbesondere einem nach einem der Ansprüche 1 bis 15, umfassend eine erste (33) und zweite (35) Halterung zum Halten jeweils eines Endes der Blattfeder (5) und eine Schließdruckeinrichtung (37), durch die die Blattfeder (5) weiter spannbar ist, wenn der Fülllochdeckel (1) auf dem Domdeckel (3) aufliegt, um einen geeigneten Schließdruck zwischen dem Fülllochdeckel (1) und dem Domdeckel (3) zu erzeugen.

17. Domdeckel nach Anspruch 16, **dadurch gekennzeichnet, dass** die erste Halterung (33) eine Gelenkachse (39) umfasst, an der ein Scharnierende (41) der Blattfeder (5) derart angeordnet ist, dass der Fülllochdeckel (1) um die Gelenkachse (39) verschwenkbar ist, so dass die Blattfeder (5) als Verschlussbügel dient.

18. Domdeckel nach Anspruch 16 oder 17, **dadurch gekennzeichnet, dass** dieser einen Kniehebel (7) umfasst, der als zweite Halterung (35) und als Schließdruckeinrichtung (37) dient.

19. Domdeckel nach einem der Ansprüche 16 bis 18, **dadurch gekennzeichnet, dass** die erste (33) und die zweite (35) Halterung tankinnenseitig durch mindestens ein Versteifungselement (43) miteinander verbunden sind und so ein Dichtungsbereich für den Fülllochdeckel (1) besonders formstabil ausgebildet ist.

20. Domdeckel nach Anspruch 19, **dadurch gekennzeichnet, dass** die Versteifungselemente (43) elliptische oder kreisförmige Versteifungsringe (43) aus Blech sind, die konzentrisch zum Fülllochdeckel (1) hochkant an dem Domdeckel (3) befestigt sind.

21. Tank auf dem ein Fülllochdeckel nach einem der Ansprüche 1 bis 15 unmittelbar oder auf einem Domdeckel nach einem der Ansprüche 16 bis 20 angeordnet ist, der mit dem Tank umfangsseitig verschraubt ist.

22. Tankwagen mit einem Tank nach Anspruch 21.
